# EUROPEAN PATENT APPLICATION

(11) **EP 3 886 029 A1**
(43) Date of publication of application: **29.09.2021**
(21) Application number: 21156595.7
(22) Date of filing: 11.02.2021
(51) Int. Cl.: G06Q 30/02

(54) **METHOD AND SYSTEM FOR UNSUPERVISED MULTI-MODAL SET COMPLETION AND RECOMMENDATION**

(30) Priority: 26.03.2020 IN 202021013242
(71) Applicant: Tata Consultancy Services Limited, Maharashtra (IN)
(72) Inventor: Kalra, Kanika, 411013 Pune - Maharashtra (IN); Patwardhan, Manasi, 411013 Pune - Maharashtra (IN); Karande, Shirish Subhash, 411013 Pune - Maharashtra (IN); Hingmire, Swapnil Vishveshwar, 411013 Pune - Maharashtra (IN); Palshikar, Girish Keshav, 411013 Pune - Maharashtra (IN)
(74) Representative: Goddar, Heinz J.

(57) **Abstract**

The online shopping is highly based on human perception on products and the human perception on products depends on semantic features of products. Conventional methods provides product recommendation based on historical data and are supervised. The present disclosure receives a set of multi-modal data. A plurality of features are extracted from the set of data at a plurality of resolution levels and the plurality of features are arranged as parallel corpus based on a category associated with each data from the set of data. Further, an abstract interaction vector is computed for each element of the set of data using the parallel corpus. Further, the set of recommendations are identified by comparing the abstract interaction vector associated with the set of data with an abstract interaction vector associated with each of a plurality of items stored in the database by utilizing a similarity metric.

## Description

### CROSS-REFERENCE TO RELATED APPLICATIONS AND PRIORITY

This patent application claims priority to India Patent Application 202021013242, filed on March 26, 2020.

### TECHNICAL FIELD

The disclosure herein generally relates to the field of computer vision and, more particular, to a method and system for unsupervised multi-modal set completion and recommendation.

### BACKGROUND

Online shopping is highly based on human perception of products. The human perception of products depends more on semantic features of products and not just low level visual characteristics. For example, humans perceive fashion products in terms of style, art products in terms of aesthetics and music pieces in terms of genre. The semantic features describes visual content of an image by correlating low level features such as color, gradient orientation with the content of an image scene. Hence semantic feature based product recommendation systems like computer vision based product recommendation systems are providing better results in online shopping domains like fashion, clothing, jewelry, furniture, beauty products, and the like.

Conventional methods provides product recommendation based on only historical interaction data between users and previously purchased products to provide new recommendations. Further, the conventional methods learn feature transformation for measuring visual compatibility between products in a supervised manner and fails to consider semantic features of products. Moreover, the conventional methods rely on information from external sources or require labelled data such as semantic textual annotations to measure visual compatibility between product images. Thus, human perception based product recommendation in an unsupervised environment is challenging.

### SUMMARY

Embodiments of the present disclosure present technological improvements as solutions to one or more of the above-mentioned technical problems recognized by the inventors in conventional systems. For example, in one embodiment, a method for unsupervised multi-modal set completion and recommendation is provided. The method includes receiving a set of data, wherein the set of data includes at least one of, a set of images, a set of audio and a set of video captured in a plurality of modalities, wherein the each data element in the set of data is categorized. Further, the method includes computing a plurality of features for each data element by utilizing a machine learning model, wherein the plurality of features extracted at a plurality of resolutions. Furthermore, the method includes obtaining a plurality of active features corresponding to each data element by removing irrelevant features from the plurality of features based on a predetermined threshold. Furthermore, the method includes generating a parallel corpus by arranging the plurality of active features based on the category associated with each data element. Furthermore, the method includes computing an abstract interaction vector for the set of data t by jointly modelling the parallel corpus using a probabilistic model. Finally, the method includes generating a set of recommendations corresponding to the set of data based on the abstract interaction vector by utilizing a similarity metric, wherein generating the set of recommendations including: (i) computing a similarity index between the abstract interaction vector of the set of data and a pre-computed abstract interaction vector corresponding to each of a plurality of items stored in the database using the similarity metric (ii) ranking each of the plurality of items stored in the database in descending order based on the corresponding similarity index and (iii) identifying a set of items with highest similarity index from the plurality of items stored in the database for recommendation.

In another aspect, a system for unsupervised multi-modal set completion and recommendation is provided. The system includes at least one memory storing programmed instructions, one or more Input /Output (I/O) interfaces, and one or more hardware processors operatively coupled to the at least one memory, wherein the one or more hardware processors are configured by the programmed instructions to receive a set of data, wherein the set of data includes at least one of, a set of images, a set of audio and a set of video captured in a plurality of modalities, wherein the each data element in the set of data is categorized. Further, the one or more hardware processors are configured by the programmed instructions to compute a plurality of features for each data element by utilizing a machine learning model, wherein the plurality of features extracted at a plurality of resolutions. Furthermore, the one or more hardware processors are configured by the programmed instructions to obtain a plurality of active features corresponding to each data element by removing irrelevant features from the plurality of features based on a predetermined threshold. Furthermore, the one or more hardware processors are configured by the programmed instructions to generate a parallel corpus by arranging the plurality of active features based on the category associated with each data element. Furthermore, the one or more hardware processors are configured by the programmed instructions to compute an abstract interaction vector for the set of data t by jointly modelling the parallel corpus using a probabilistic model. Finally, the one or more hardware processors are configured by the programmed instructions to generate a set of recommendations corresponding to the set of data based on the abstract interaction vector by utilizing a similarity metric, wherein generating the set of recommendations including: (i) computing a similarity index between the abstract interaction vector of the set of data and a pre-computed abstract interaction vector corresponding to each of a plurality of items stored in the database using the similarity metric (ii) ranking each of the plurality of items stored in the database in descending order based on the corresponding similarity index and (iii) identifying a set of items with highest similarity index from the plurality of items stored in the database for recommendation.

In yet another aspect, a computer program product including a non-transitory computer-readable medium having embodied therein a computer program for method and system for unsupervised multi-modal set completion and recommendation is provided. The computer readable program, when executed on a computing device, causes the computing device to receive a set of data, wherein the set of data includes at least one of, a set of images, a set of audio and a set of video captured in a plurality of modalities, wherein the each data element in the set of data is categorized. Further, the computer readable program, when executed on a computing device, causes the computing device to compute a plurality of features for each data element by utilizing a machine learning model, wherein the plurality of features extracted at a plurality of resolutions. Furthermore, the computer readable program, when executed on a computing device, causes the computing device to obtain a plurality of active features corresponding to each data element by removing irrelevant features from the plurality of features based on a predetermined threshold. Furthermore, the computer readable program, when executed on a computing device, causes the computing device to generate a parallel corpus by arranging the plurality of active features based on the category associated with each data element. Furthermore, the computer readable program, when executed on a computing device, causes the computing device to compute an abstract interaction vector for the set of data t by jointly modelling the parallel corpus using a probabilistic model. Finally, the computer readable program, when executed on a computing device, causes the computing device to generate a set of recommendations corresponding to the set of data based on the abstract interaction vector by utilizing a similarity metric, wherein generating the set of recommendations including: (i) computing a similarity index between the abstract interaction vector of the set of data and a pre-computed abstract interaction vector corresponding to each of a plurality of items stored in the database using the similarity metric (ii) ranking each of the plurality of items stored in the database in descending order based on the corresponding similarity index and (iii) identifying a set of items with highest similarity index from the plurality of items stored in the database for recommendation.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1 is a functional block diagram of a system for unsupervised multi-modal set completion and recommendation, according to some embodiments of the present disclosure.
FIG. 2 is an exemplary flow diagram for a method for unsupervised multi-modal set completion and recommendation implemented by the system of FIG. 1, in accordance with some embodiments of the present disclosure.
FIG. 3 illustrates a functional block diagram of the system of FIG. 1 for unsupervised multi-modal set completion and recommendation, in accordance with some embodiments of the present disclosure.

### DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the spirit and scope of the disclosed embodiments. It is intended that the following detailed description be considered as exemplary only, with the true scope and spirit being indicated by the following claims.

Embodiments herein provide a method and system for unsupervised multi-modal set completion and recommendation to perform set completion and recommendation in accurate manner. The present disclosure focuses on problem of proposing a common abstract representation for a set of data. The set of data including at least one of a set of images, a set of videos and a set of audio are given as input to the system. A plurality of features are extracted from the set of data at a plurality of resolution levels and the plurality of features are arranged as parallel corpus based on a category associated with each data from the set of data. Further, an abstract interaction vector is computed for each element of the set of data using the parallel corpus. Further, the set of recommendations are identified by comparing the abstract interaction vector associated with the set of data with an abstract interaction vector associated with each of a plurality of items stored in the database by utilizing a similarity metric.

In an embodiment, the present disclosure is useful in set recommendation or set completion problem where suggesting a set of products which go along well together is required. In addition to product compatibility, the method for unsupervised multi-modal set completion and recommendation also addresses the problem of the how visual appearance of the set of items are perceived by a user in order to provide effective online set recommendation. For example, the present disclosure allows online outfit recommendation with a coherent fashion style, say formal, or photos assortment for a collage which leads to high aesthetic value, etc. Further, the present disclosure identifies a coherent general theme that allows to understand image compatibility beyond visual similarity for product recommendation. Further, the present disclosure solves the problem of computing a common representation learning by using only images and categories associated with the images without requiring any external data labels as in the case of supervised learning. The present disclosure does not require semantic attributes, comments from set posts on social media and the like.

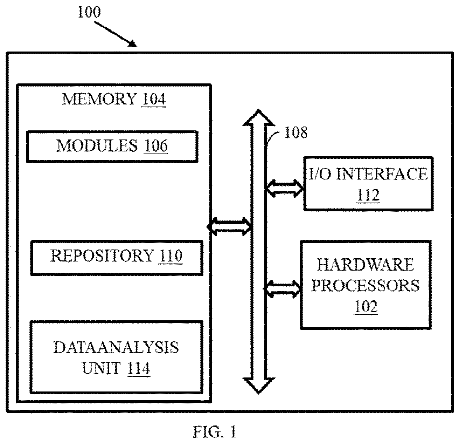

Referring now to the drawings, and more particularly to FIG. 1 through 3, where similar reference characters denote corresponding features consistently throughout the figures, there are shown preferred embodiments and these embodiments are described in the context of the following exemplary system and/or method.

FIG. 1 is a functional block diagram of a system 100 for unsupervised multi-modal set completion and recommendation, according to some embodiments of the present disclosure. The system 100 includes or is otherwise in communication with hardware processors 102, at least one memory such as a memory 104, an I/O interface 112. The hardware processors 102, memory 104, and the Input /Output (I/O) interface 112 may be coupled by a system bus such as a system bus 108 or a similar mechanism. In an embodiment, the hardware processors 102 can be one or more hardware processors.

The I/O interface 112 may include a variety of software and hardware interfaces, for example, a web interface, a graphical user interface, and the like. The I/O interface 112 may include a variety of software and hardware interfaces, for example, interfaces for peripheral device(s), such as a keyboard, a mouse, an external memory, a printer and the like. Further, the interface 112 may enable the system 100 to communicate with other devices, such as web servers and external databases.

The I/O interface 112 can facilitate multiple communications within a wide variety of networks and protocol types, including wired networks, for example, local area network (LAN), cable, etc., and wireless networks, such as Wireless LAN (WLAN), cellular, or satellite. For the purpose, the I/O interface 112 may include one or more ports for connecting a number of computing systems with one another or to another server computer. The I/O interface 112 may include one or more ports for connecting a number of devices to one another or to another server.

The one or more hardware processors 102 may be implemented as one or more microprocessors, microcomputers, microcontrollers, digital signal processors, central processing units, state machines, logic circuitries, and/or any devices that manipulate signals based on operational instructions. Among other capabilities, the one or more hardware processors 102 is configured to fetch and execute computer-readable instructions stored in the memory 104.

The memory 104 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. In an embodiment, the memory 104 includes a plurality of modules 106 and a data analysis unit 114. The memory 104 also includes a data repository 110 for storing data processed, received, and generated by the plurality of modules 106 and the data analysis unit 114.

The plurality of modules 106 include programs or coded instructions that supplement applications or functions performed by the system 100 for unsupervised multi-modal set completion and recommendation. The plurality of modules 106, amongst other things, can include routines, programs, objects, components, and data structures, which performs particular tasks or implement particular abstract data types. The plurality of modules 106 may also be used as, signal processor(s), state machine(s), logic circuitries, and/or any other device or component that manipulates signals based on operational instructions. Further, the plurality of modules 106 can be used by hardware, by computer-readable instructions executed by a processing unit, or by a combination thereof. The plurality of modules 106 can include various sub-modules (not shown). The plurality of modules 106 may include computer-readable instructions that supplement applications or functions performed by the system 100 for unsupervised multi-modal set completion and recommendation.

The data repository 110 may include a plurality of abstracted piece of code for refinement and data that is processed, received, or generated as a result of the execution of the plurality of modules in the module(s) 106 and the modules associated with the data analysis unit 114. The data repository or database may also include a plurality of items including image data, video data, text data and audio data.

Although the data repository 110 is shown internal to the system 100, it will be noted that, in alternate embodiments, the data repository 110 can also be implemented external to the computing device 100, where the data repository 110 may be stored within a database (not shown in FIG. 1) communicatively coupled to the system 100. The data contained within such external database may be periodically updated. For example, new data may be added into the database (not shown in FIG. 1) and/or existing data may be modified and/or non-useful data may be deleted from the database (not shown in FIG. 1). In one example, the data may be stored in an external system, such as a Lightweight Directory Access Protocol (LDAP) directory and a Relational Database Management System (RDBMS).

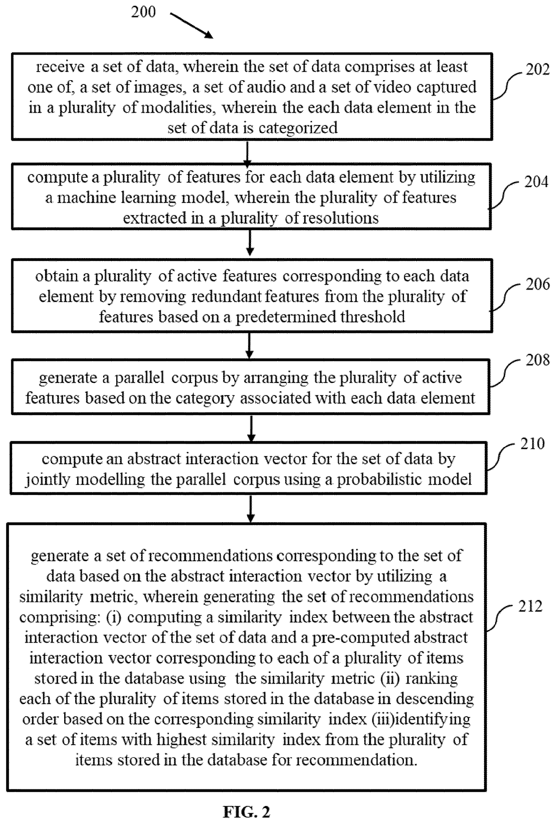

FIG. 2 is exemplary flow diagram for a processor implemented method for unsupervised multi-modal set completion and recommendation implemented by the system of FIG. 1, according to some embodiments of the present disclosure. In an embodiment, the system 100 comprises one or more data storage devices or the memory 104 operatively coupled to the one or more hardware processor(s) 102 and is configured to store instructions for execution of steps of the method 200 by the one or more hardware processors 102. The steps of the method 200 of the present disclosure will now be explained with reference to the components or blocks of the system 100 as depicted in FIG. 1 and the steps of flow diagram as depicted in FIG. 2. The method 200 may be described in the general context of computer executable instructions. Generally, computer executable instructions can include routines, programs, objects, components, data structures, procedures, modules, functions, etc., that perform particular functions or implement particular abstract data types. The method 200 may also be practiced in a distributed computing environment where functions are performed by remote processing devices that are linked through a communication network. The order in which the method 200 is described is not intended to be construed as a limitation, and any number of the described method blocks can be combined in any order to implement the method 200, or an alternative method. Furthermore, the method 200 can be implemented in any suitable hardware, software, firmware, or combination thereof.

At step 202 of the method 200, the one or more hardware processors (102) receive a set of data, wherein the set of data includes at least one of, a set of images, a set of audio and a set of video captured in a plurality of modalities, wherein the each data element in the set of data is categorized. The set of data can also include textual data.

At step 204 of the method 200, the one or more hardware processors (102) compute a plurality of features for each data element from the set of data by utilizing a machine learning model. The plurality of features extracted at a plurality of resolutions.

At 206 of the method 200, the one or more hardware processors (102) obtain a plurality of active features corresponding to each data element from the set of data by removing irrelevant features from the plurality of features based on a predetermined threshold.

At 208 of the method 200, the one or more hardware processors (102) generate a parallel corpus by arranging the plurality of active features based on a category associated with each data element from the set of data. The parallel corpus includes a plurality of active features corresponding to each category of data element.

At 210 of the method 200, the one or more hardware processors (102) computes an abstract interaction vector for the set of data using the parallel corpus by jointly modelling the parallel corpus using a probabilistic model. The joint modelling projects a lower dimensional space such that probability of joint occurrences of the active features of each corpus is maximized by the probabilistic model. The probabilistic model can be an extension of Latent Dirichlet Allocation (LDA) or Auto encoders capable of receiving a set as input. In an embodiment, the database includes the plurality of items and the abstract interaction vector corresponding to each of the plurality of items are pre-computed.

At 210 of the method 200, the one or more hardware processors (102) generates a set of recommendations corresponding to the set of data based on the abstract interaction vector by utilizing a similarity metric, wherein the similarity metric includes one of a Euclidean distance and cosine similarity. The method of generating the set of recommendations includes the following steps: (i) computing a similarity index between the abstract interaction vector of the set of data and the pre-computed abstract interaction vector corresponding to each of the plurality of items stored in the database using the similarity metric (ii) ranking each of the plurality of items stored in the database in descending order based on the corresponding similarity index and (iii) identifying a set of items with highest similarity index from the plurality of items stored in the database for recommendation.

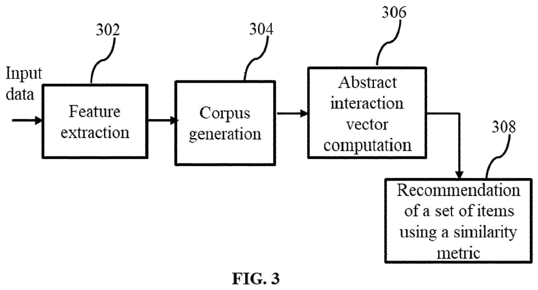

FIG. 3 illustrates a functional block diagram of the system of FIG. 1 for unsupervised multi-modal set completion and recommendation, in accordance with some embodiments of the present disclosure. Now referring to FIG. 3, the functional block diagram includes a module for feature extraction using a machine learning model 302, a module for corpus generation 304, a module for abstract interaction vector computation 306 and a module for recommending the set of items which go well with each other 308. In an embodiment, the modules 302, 304, 306 and 308 are present inside the data analysis unit 114.

In an embodiment, the module 302 extracts the plurality of features corresponding to each data from the data set at a plurality resolution levels or in a plurality of granular levels by using the machine learning model. The machine learning model may be pre-trained with ImageNet data set and not with domain specific images or data and hence unsupervised. Here, the machine learning model includes a plurality of filters to generate the plurality of features at the plurality of granular levels. Each filter from the plurality of filters can compute a feature. Similarly, the plurality of features in different resolution/granularity are obtained using the feature extraction module 302. Further, the plurality of active features are obtained by removing irrelevant features from the plurality of features by using the predetermined threshold. For example, the predetermined threshold is 0.8.

In an embodiment, the module 304 generates the corpus corresponding to each category of data from the set of data simultaneously. Each corpus includes the active features corresponding to each category of data from the set of data.

In an embodiment, the module 306 computes abstract interaction vector of the set of data based on the parallel corpus by jointly modelling each corpus using a probabilistic model. The joint modelling projects the lower dimensional space such that probability of joint occurrences of the active features of each corpus is maximized by the probabilistic model.

In an embodiment, the module 308 recommends the set of items which go well with each other. Here, the items are recommended based on the comparison between abstract interaction vector associated with the set of data and the abstract interaction vectors corresponding to each of the plurality of items stored in the database. The comparison is done based on the similarity index computed using the similarity metric.

The data analysis unit 114, executed by the one or more processors of the system 100, receives the set of data, wherein the set of data includes at least one of, the set of images, the set of audio and the set of video captured in a plurality of modalities, wherein the each data element in the set of data is categorized. For example, the set of images can be a set of fashion items which forms an outfit representing retro style - Polka dotted top, bell bottom pants, red bag. For example, the set of audio can be a set of audio clips which represents a genre say pop, wherein the audio clips are taken from the same or multiple songs. For example, the set of video can be video clips representing romance as an abstract concept, the video clips could be from the same movie or different movie, where characters may be holding hands, looking into each other eyes etc. In an embodiment, the input set of data can also include textual data.

Further, the data analysis unit 114, executed by one or more processors of the system 100, compute the plurality of features for each data element from the set of data by utilizing the machine learning model, wherein the plurality of features are extracted at the plurality of resolutions. The plurality of features can be computed by using a plurality of techniques. In an embodiment, the plurality of features can be the outputs of convolution layers of a pre-trained Convolution Neural Network (CNN) formally known as filter maps, which captures characteristics of the input data at distinct resolution depending on the layer from which the output is extracted. For example, the CNN may be a generic pre-trained network with ImageNet data set and not with domain specific images or data.

In another embodiment, the plurality of features can be computed by using other computer vision techniques including HOG (Histogram Oriented Gradients), SIFT (Scale Invariant Feature Transform) for image patches at different resolution or for a full image.

Further, the data analysis unit 114, executed by one or more processors of the system 100, obtains the plurality of active features corresponding to each data element from the set of data by removing irrelevant features from the plurality of features based on the predetermined threshold. The plurality of features from each layer of the pre-trained CNN are extracted from filter map. The size of the filters depends on the pre-trained CNN being used. Since total number of filters obtained is very high, the present disclosure uses the predefined threshold to understand which filter could be irrelevant based on some heuristics. The heuristic could be different for different layers. For example, the heuristic is "if 3/4 of the filter map grid has values greater than 0.8 (predefined filter threshold), the filters are considered to be active and provide active features.

Further, the data analysis unit 114, executed by one or more processors of the system 100, generates the parallel corpus by arranging the plurality of active features based on the category associated with each data element from the set of data. The parallel corpus includes the plurality of active features corresponding to each category of data from the set of data. For example, the plurality of active features are computed for each data element of the set of data. Consider a set S, having 4 elements E1,E2,E3,E4 and each element belong to categories C1,C2,C3,C4 respectively. Features are computed for each element E1,E2,E3,E4 and the features obtained are F1,F2,F3,F4 respectively. The organization of the features to categories and storing in the data structure for multiple set is called corpus generation. The corpus is referred to as parallel corpus as each row corresponds to a set and each element is a set are organized in parallel. For example, the corpus for the above example is as shown in table 1. Each row is a set. Each set (row) in the table 1 includes features from 4 categories (described in columns). Here, F11 indicates feature 1 of set 1, F12 indicates feature 2 of set 1 and F32 indicates feature 2 of set 3 and the like.

**Table 1**

| Category (C1) | Category (C2) | Category (C3) | Category (C4) |
|---|---|---|---|
| F11 | F12 | F13 | F14 |
| F21 | F22 | F23 | F24 |
| F31 | F32 | F33 | F34 |
| F41 | F42 | F43 | F44 |

Further, the data analysis unit 114, executed by one or more processors of the system 100, computes the abstract interaction vector for the set of data by jointly modelling the parallel corpus using the probabilistic model like Latent Dirichlet Allocation (LDA). The joint modelling projects a lower dimensional space such that probability of joint occurrences of the active features of each corpus is maximized by the probabilistic model. In an embodiment, the joint modelling can happen using any probabilistic graphical model such as an extension of LDA or auto encoders (any model which can learn abstract latent representation) which takes a set as an input instead of one single item.

In an embodiment, abstract interaction vector or theme can be computed using auto encoder where the input is reconstructed by projecting it to lower dimension latent space. It is known to discover the commonalities of the input features are correlated.

In another embodiment, abstract interaction vector or theme can be computed using topic modeling approach. The abstract interaction vector is alternatively represented as theme or latent representation throughout the document. Each category is treated as a language and modelled as a multilingual topic modeling problem. This model learns a shared topic document distribution across the products within a set by learning the product feature distribution. The topic modelling approach has been used in literature to jointly model multiple modalities. For instance, the comparable corpus or corpus contains one language as text and other as image or by modelling text description of different product categories as multiple languages. However, image features of products belonging to different categories are used as multiple languages. The topic model trained on set product feature indexes data can be used to obtain topic distribution. The topic distribution can be extracted even for product set with missing product language information. This topic distribution represent the general theme.

Further, the data analysis unit 114, executed by one or more processors of the system 100, generates the set of recommendations corresponding to the set of data based on the abstract interaction vector by utilizing the similarity metric, wherein the similarity metric includes one of the Euclidean distance and the cosine similarity. The method of generating the set of recommendations includes the following steps: (i) computing the similarity index between the abstract interaction vector corresponding to the set of data and the pre-computed abstract interaction vector corresponding to each of the plurality of items stored in the database using the similarity metric (ii) ranking each of the plurality of items stored in the database in descending order based on the corresponding similarity index and (iii) identifying the set of items with highest similarity index from the plurality of items stored in the database for recommendation.

In an embodiment, the present disclosure can be used in outfit search. For example, if there is a set of fashion items representing a retro style and there is a need to search a similar retro style outfit in the database for recommendation. The present disclosure can compute latent representation/ abstract interaction vectors of all items in the database and the input set of data. Further, the similarity index between the latent representation of the input set of data and the latent representation of the plurality of items stored in the database are computed and compared. The plurality of items in the database are ranked based on the similarity index. The set of item with highest similarity is identified from the plurality of items and recommended.

In another embodiment, if there is a set having elements with one or more category, say a top outfit and a bag and if there is a needed to recommend an element of category missing from the given set say bottom outfit. Here, the latent representation is computed for the original input set including the top outfit and the bag. A plurality of sets are formed by concatenating the original input set of items in the set and each missing element in the choice list or the plurality of items (which is stored in the database). The latent representation is computed for the formed sets. Further, similarity index is computed between the original set representation and sets formed with choice as an element in the set. Further, the bottom outfit choices are ranked and the top k elements from missing element category are recommended.

The present disclosure can be utilized in subscription box services where set recommendation is of huge importance. For instance, a story book subscription service suggests set of story books which can be recommended together, or a beauty box subscription service which recommends set of beauty products to women, etc. For online subscription outfit recommendation service, which recommends a set of clothing and accessary images. In addition to the product set compatibility, it is important to understand how visual appearance of the set of images is perceived by the user for effective online set recommendation.

In an embodiment, the present disclosure can learn common abstract representation for a product set using only product images without external labelled data and hence it is unsupervised. For example, the present disclosure would be capable of extracting style representation for a complete outfit (set) given the set of images of individual elements such as upper and lower body garments, bags, shoes, jewelry, etc., or given a set of images of products which would compose a display for a retail store, our system would provide an aesthetic representation of the display consisting of these set of products.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of present disclosure herein address unresolved problem of unsupervised multi-modal set recommendation. The present disclosure learns abstract common representation or general theme of set of images (products) by modelling their interactions jointly at different resolution levels. The present disclosure does not require any labelled data and thus can work in a completely unsupervised fashion. The present disclosure obtains the general theme or the common representation for the product set which exists in a latent space. This representation is more semantic and abstract. Further, the present disclosure implements a model which is robust enough to accommodate the common concepts which are distributed among the set of images at different granularities and resolution levels leading to a common representation that can be learned together for the overall set.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g. any kind of computer like a server or a personal computer, or the like, or any combination thereof. The device may also include means which could be e.g. hardware means like e.g. an application-specific integrated circuit (ASIC), a field-programmable gate array (FPGA), or a combination of hardware and software means, e.g. an ASIC and an FPGA, or at least one microprocessor and at least one memory with software modules located therein. Thus, the means can include both hardware means and software means. The method embodiments described herein could be implemented in hardware and software. The device may also include software means. Alternatively, the embodiments may be implemented on different hardware devices, e.g. using a plurality of CPUs, GPUs and edge computing devices.

The embodiments herein can comprise hardware and software elements. The embodiments that are implemented in software include but are not limited to, firmware, resident software, microcode, etc. The functions performed by various modules described herein may be implemented in other modules or combinations of other modules. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope and spirit of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e. non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope and spirit of disclosed embodiments being indicated by the following claims.

## Claims

1. A processor implemented method, the method comprising:
receiving, by one or more hardware processors, a set of data, wherein the set of data comprises at least one of, a set of images, a set of audio and a set of video captured in a plurality of modalities, wherein each data element in the set of data is categorized (202);
computing, by the one or more hardware processors, a plurality of features for each data element by utilizing a machine learning model, wherein the plurality of features are extracted at a plurality of resolutions (204);
obtaining, by the one or more hardware processors, a plurality of active features corresponding to each data element by removing irrelevant features from the plurality of features based on a predetermined threshold (206);
generating, by the one or more hardware processors, a parallel corpus by arranging the plurality of active features based on the category associated with each data element (208);
computing, by the one or more hardware processors, an abstract interaction vector for the set of data by jointly modelling the parallel corpus using a probabilistic model (210); and
generating, by the one or more hardware processors, a set of recommendations corresponding to the set of data based on the abstract interaction vector by utilizing a similarity metric (212), wherein generating the set of recommendations comprising:
computing a similarity index between the abstract interaction vector of the set of data and a pre-computed abstract interaction vector corresponding to each of a plurality of items stored in the database using the similarity metric;
ranking each of the plurality of items stored in the database in descending order based on the corresponding similarity index; and
identifying a set of items with highest similarity index from the plurality of items stored in the database for recommendation.

2. The method of claim 1, wherein the probabilistic model comprises one of an extension of Latent Dirichlet Allocation (LDA), and auto encoders capable of accepting a set as input.

3. The method of claim 1, wherein the joint modelling projects a lower dimensional space such that probability of joint occurrences of the active features of each corpus is maximized by the probabilistic model.

4. The method of claim 1, wherein the similarity metric comprises one of a Euclidean distance, and a cosine similarity.

5. A system (100) comprising:
at least one memory (104) storing programmed instructions;
one or more Input /Output (I/O) interfaces (112); and
one or more hardware processors (102) operatively coupled to the at least one memory (104), wherein the one or more hardware processors (102) are configured by the programmed instructions to:
receive a set of data, wherein the set of data comprises at least one of a set of images, a set of audio and a set of video captured in a plurality of modalities, wherein each data element in the set of data is categorized;
compute a plurality of features for each data element by utilizing a machine learning model, wherein the plurality of features are extracted at a plurality of resolutions;
obtain a plurality of active features corresponding to each data element by removing irrelevant features from the plurality of features based on a predetermined threshold;
generate a parallel corpus by arranging the plurality of active features based on the category associated with each data element;
compute an abstract interaction vector for the set of data by jointly modelling the parallel corpus using a probabilistic model; and
generate a set of recommendations corresponding to the set of data based on the abstract interaction vector by utilizing a similarity metric, wherein generating the set of recommendations comprising:
computing a similarity index between the abstract interaction vector of the set of data and a pre-computed abstract interaction vector corresponding to each of a plurality of items stored in the database using the similarity metric;
ranking each of the plurality of items stored in the database in descending order based on the corresponding similarity index; and
identifying a set of items with highest similarity index from the plurality of items stored in the database for recommendation.

6. The system of claim 5, wherein the probabilistic model comprises an extension of Latent Dirichlet Allocation (LDA) and auto encoders capable of accepting a set as input.

7. The system of claim 5, wherein joint modelling projects a lower dimensional space such that probability of joint occurrences of the active features of each corpus is maximized by the probabilistic model.

8. The system of claim 5, wherein the similarity metric comprises one of a Euclidean distance and a cosine similarity.

9. One or more non-transitory machine readable information storage mediums comprising one or more instructions which when executed by one or more hardware processors causes:
receiving a set of data, wherein the set of data comprises at least one of a set of images, a set of audio and a set of video captured in a plurality of modalities, wherein each data element in the set of data is categorized;
computing a plurality of features for each data element by utilizing a machine learning model, wherein the plurality of features are extracted at a plurality of resolutions;
obtaining a plurality of active features corresponding to each data element by removing irrelevant features from the plurality of features based on a predetermined threshold;
generating a parallel corpus by arranging the plurality of active features based on the category associated with each data element;
computing an abstract interaction vector for the set of data by jointly modelling the parallel corpus using a probabilistic model; and
generating a set of recommendations corresponding to the set of data based on the abstract interaction vector by utilizing a similarity metric, wherein generating the set of recommendations comprising:
computing a similarity index between the abstract interaction vector of the set of data and a pre-computed abstract interaction vector corresponding to each of a plurality of items stored in the database using the similarity metric;
ranking each of the plurality of items stored in the database in descending order based on the corresponding similarity index; and
identifying a set of items with highest similarity index from the plurality of items stored in the database for recommendation.
